# EUROPÄISCHE PATENTANMELDUNG

(11) **EP 1 024 181 A1**
(43) Veröffentlichungstag der Anmeldung: **02.08.2000**
(21) Anmeldenummer: 00100460.5
(22) Anmeldetag: 11.01.2000
(51) Int. Cl.: C09D 5/08

(54) **Anti-Korrosionsschicht**

(30) Priorität: 29.01.1999 DE 19903400
(71) Anmelder: DaimlerChrysler AG, 70567 Stuttgart (DE)
(72) Erfinder: Schmidt, Christina, Dr., 57080 Siegen (DE)

(57) **Zusammenfassung**

Aufgabe der Erfindung ist es eine Anti-Korrosionsschicht für Bleche zu schaffen, die langzeitwirkende korrosionshemmende Eigenschaften aufweist.

Diese Aufgabe wird erfindungsgemäß dadurch gelöst, daß der Füllstoff zumindest teilweise aus Hohlraumstrukturen besteht, deren Hohlräume mit anorganischen/organischen Inhibitoren und/oder Antioxidantien beladen sind.

Die Erfindung findet Anwendung in Anti-Korrosionsschichten mit einem Anteil von etwa 20 bis 97 Gew% Füllstoff.

## Beschreibung

Die Erfindung betrifft eine Anti-Korrosionsschicht gemäß dem Oberbegriff des Patentanspruchs 1.

Die Beschichtung von metallischen Oberflächen stellt bezüglich des damit angestrebten Korrosionsschutzes hohe Anforderungen; insbesondere hinsichtlich der Beständigkeit solcher Schutzwirkungen bei stark wechselnden Umgebungsbeanspruchungen, wie sie bei Fahrzeugen aller Art auftreten.

Es ist bei Stahlblechen bekannt, an diesen eine Verzinkung vorzunehmen und die so verzinkten Bleche mit einer organischen Beschichtung zu überziehen (DE-OS 19700319). Jedoch hat sich gezeigt, daß unter den Betriebsbedingungen für Fahrzeuge verzinkte Stahlbleche, die mit Phosphat- und/oder Chromatschichten sowie Lackschichten versehen wurden, für einen vollständigen und dauerhaften Korrosionsschutz nicht ausreichen.

Verzinkte Bleche können sogar als beschichtungsfeindlich bezeichnet werden, wenn Zinkstaubfarben oder grob gemahlene Zinkpartikel verwendet werden. Derartig verzinkte Bleche besitzen keinen sicheren kathodischen Korrosionsschutz, da derartige Zinkpartikel zu verhältnismäßig schneller Oxidation neigen und dadurch zu elektrischen Isolatoren werden. Die elektrische Leitfähigkeit in der Korrosionsschutzschicht wird dadurch so weit herabgesetzt, daß die insbesondere im Hinblick auf eine Unterrostung wichtige kathodische Schutzwirkung aufgehoben wird.

Das gleiche gilt für unverzinkte Bleche, bei denen man zur Verbesserung der Korrosionsbeständigkeit versucht hat organischen Beschichtungsmaterialien Füllstoffe beizumengen, die aus elektrisch leitenden Metallpartikeln bestehen, die ein negatives elektrisches Potential in Bezug zu dem Potential der Bleche aufweisen. Für Stahlbleche kommen hierfür beispielsweise Zink, Aluminium oder Magnesium in Frage. Auch in diesem Fall oxidieren die Metallpartikel und setzen die kathodische Schutzwirkung herab.

Der vorangehend beschriebene Abbau des kathodischen Schutzes über die Oxidation der Verzinkung oder der hinzugefügten Metallpartikeln in organischen Schutzschichten führt dazu, daß nach längeren Standzeiten in Luft und feuchter Atmosphäre der anfängliche Korrosionsschutz verhältnismäßig rasch nachläßt.

In DE 30 01 882 C2 ist ein Korrosionsinhibitor in Form von oxidischen Teilchen mit einer Größe von bis zu 10µm als Füller für eine Anti-Korrosionsschicht offenbart, an denen durch Ionenaustausch korrosionshemmende Anionen gebunden sind.

Die Abgabe der derart gebundenen Anionen läuft jedoch zu schnell ab, da reaktive Ionen, die durch die Schicht diffundieren, jedoch nicht gebunden werden sollen, die korrosionshemmenden Anionen an den frei zugänglichen Stellen auf den oxidischen Teilchen zu schnell binden. Nachteilig wirkt sich dies in einem zu schnellen Abklingen der korrosionshemmenden Eigenschaften der Schicht aus.

Aufgabe der Erfindung ist es eine Anti-Korrosionsschicht für Bleche zu schaffen, die langzeitwirkende korrosionshemmende Eigenschaften aufweist.

Diese Aufgabe wird erfindungsgemäß durch die Merkmale des Patentanspruchs 1 gelöst. Weiterbildungen der Erfindung sind in den Unteransprüchen angegeben.

Erfindungsgemäß werden zur Beschichtung von Metalloberflächen geeigneten organischen Polymeren Füllerstoffe hinzugefügt, die eine Hohlraumstruktur aufweisen; z.B. können Zeolithe oder Kieselgur in den Füllerstoffen eingebunden sein. Die Hohlraumstrukturen dieser Füllerstoffe sind erfindungsgemäß mit anorganischen und/oder organischen Inhibitoren und/oder Antioxidantien, wie z.B. mit Aminen, Ascorbinsäuren, Zirkonaten oder Benzotriazol, gefüllt.

Ein Vorteil der erfindungsgemäßen Lösung besteht darin, daß bei einer umgebungsbedingten Permeation von Sauerstoff und Wasser durch die Polymerschicht die Inhibitoren über einen langen Zeitraum dosiert aus den Hohlraumstrukturen herausgelöst werden und durch die Polymerschicht zur Metalloberfläche diffundieren, wo sie als oberflächenaktive Substanzen eine korrosionsschützende Wirkung entfalten können.

Die in den Hohlraumstrukturen eingelagerten Inhibitoren und Antioxidantien weisen außerdem eine vorteilhafte Abfangwirkung auf den in die Polymerschicht eindiffundierten Sauerstoff auf und verringern somit eine Oxidation der Substratoberfläche, wodurch die Langzeitwirkung des Korrosionsschutzes verbessert wird.

Der Anteil des Füllers in der erfindungsgemäßen Anti-Korrosionsschicht ist so bemessen, daß er über den Sauerstoffeinfang einen ausreichenden Korrosionsschutz für die Blechsubstrate bietet, ohne daß der Füller Anteile von Zink oder Eisenphosphid aufweist; er kann 20 bis 97 Gewichtsprozent betragen. Als Füllmaterial können wahlweise Substanzen wie z.B. Kieselgur (SiO2), Zeolithe oder Kohlenstoff verwendet werden.

Als geeignete Inhibitoren sind wahlweise Carbonsäuren, Amine, Ketone, Aldehyde und heterozyklische Verbindungen einsetzbar. Es können auch Phosphate, Benzoate, Silicate, Vanadate, Wolframate, Zirkonate, Borate oder Molybdate oder ähnliche Substanzen zugesetzt werden.

Zu den geeigneten Antioxidantien zählen Benzaldehyd, Vitamin C, Vitamin E und ähnliche Substanzen, die ihre oberflächenaktive Wirkung entfalten, nachdem sie mit Luftsauerstoff reagiert haben.

Die Korngröße des eingesetzten Füllers soll in Abhängigkeit von der gewünschten Schichtdicke der Anti-Korrosionsschicht zwischen 0,5 µm und 10 µm betragen. Die vorgenannten Füllermaterialien sind in diesen Korngrößen durch Aufmahlen herstellbar.

Für das Beladen des Füllermaterials mit Inhibitoren und/oder Antioxidantien sind in Abhängigkeit vom Aggregatzustand dieser Substanzen verschiedene Verfahren möglich.

Liegen der Inhibitor und die Antioxidanz als Feststoff vor, so können sie in einem für die Substanzen geeigneten, Lösungsmittel gelöst und mit dem trockenen Füllermaterial bei Raumtemperatur verrührt werden. Dazu stehen dem Fachmann für die Lösung der Inhibitoren und Antioxidantien bekannte, geeignete Lösungsmittel zur Verfügung.

Flüssige Inhibitoren und Antioxidantien können über eine mit dem gewählten, getrockneten Füllermaterial gefüllte Säule gegeben werden, in der das Beladen des Füllermaterials mit den Substanzen nach dem bekannten Prinzip der Säulenchromatographie erfolgt.

Weiterhin besteht die Möglichkeit feste oder flüssige Beladungssubstanzen in die Gasphase zu überführen und über eine Säule zu geben, die mit dem gewählten getrockneten Füllermaterial gefüllt ist. Das Beladen des Füllermaterials mit den Substanzen erfolgt in diesem Verfahren nach dem bekannten Prinzip der Gaschromatographie.

Nachstehend sind einige ausgewählte Ausführungsbeispiele für die erfindungagemäße Anti-Korrosionsschicht näher beschrieben.

| Beispiel Nr. | Füller: Kieselgur (Gew%) | Beladung: Benzaldehyd (Gew%) |
|---|---|---|
| 1 | 99,9 | 0.1 |
| 2 | 99,7 | 0.3 |
| 3 | 99,0 | 1 |
| 4 | 97,0 | 3 |
| 5 | 90 | 10 |

In den vorgenannten Ausführungsbeispielen wird das Benzaldehyd im Vakuum in die Gasphase überführt und über eine mit Kieselgur beschickte Säule geleitet. Als Trägermaterial für die Gaschromatographie wird ein Schutzgas, z.B. Stickstoff oder Argon verwendet.

Das mit Antioxidanz beladene Kieselgur muß bis zu einer Mischung mit dem Polyresat der Anti-Korrosionsschicht unter Ausschluß von Luftsauerstoff gelagert werden. Es kann zur Verwendung in der Anti-Korrosionsschicht mit anderen, unbeladenen Füllmaterialien vermischt werden.

## Patentansprüche

1. Anti-Korrosionsschicht mit einem Anteil von etwa 20 bis 97 Gew% Füllstoff und an diesen adsorbierten Inhibitoren und/oder Antioxidantien, **dadurch gekennzeichnet**, daß der Füllstoff zumindest teilweise Hohlraumstrukturen aufweist und die Inhibitoren und/oder Antioxidantien in den Hohlräumen adsorbiert sind.

2. Anti-Korrosionsschicht nach Anspruch 1, **dadurch gekennzeichnet**, daß die Hohlraumstrukturen wahlweise aus Kieselgur oder aus Zeolith oder aus Kohlenstoff bestehen.

3. Anti-Korrosionsschicht nach Anspruch 1 oder 2, **dadurch gekennzeichnet**, daß als Inhibitoren wahlweise Phosphate, Benzoate, Silicate, Vanadate, Wolframate, Zirkonate, Borate oder Molybdate zugesetzt sind.

4. Anti-Korrosionsschicht nach einem der Ansprüche 1 bis 3, **dadurch gekennzeichnet**, daß als Antioxidantien wahlweise Benzaldehyd, Vitamin C, oder Vitamin E zugesetzt sind.

5. Anti-Korrosionsschicht nach einem der Ansprüche 1 bis 4, **dadurch gekennzeichnet**, daß die Korngröße des Füllstoffmaterials in Abhängigkeit von der gewünschten Schichtdicke der Anti-Korrosionsschicht zwischen 0,5 um bis 10 µm beträgt.

6. Anti-Korrosionsschicht nach einem der Ansprüche 1 bis 5, **dadurch gekennzeichnet**, daß der Beladungsvorgang der Hohlraumstrukturen über ein Verrühren von gelösten Hohlraumstrukturen und gelösten Beladungssubstanzen oder bei flüssigen Beladungssubstanzen und festen Hohlraumstrukturen nach dem Prinzip der Säulenchromatographie oder bei gasförmigen Beladungssubstanzen und festen Hohlraumstrukturen nach dem Prinzip der Gaschromatographie erfolgt.

7. Anti-Korrosionsschicht nach einem der Ansprüche 1 bis 6, **dadurch gekennzeichnet**, daß der Füller mit einem Gewichtsanteil von 90 % bis 99,9 % aus Kieselgur besteht, die mit einem korrespondierenden Gewichtsanteil von 10% bis 0,1 % mit Benzaldehyd beladen ist.
